# EUROPEAN PATENT SPECIFICATION

(11) **EP 1 250 807 B1**
(45) Date of publication and mention of the grant of the patent: **22.11.2006**
(21) Application number: 00986534.6
(22) Date of filing: 19.12.2000
(51) Int. Cl.: H04N 5/445

(54) **METHOD AND SYSTEM FOR SELECTING A TELEVISION CHANNEL**
SYSTEM UND VERFAHREN ZUR AUSWAHL EINES FERNSEHKANALS
PROCEDE ET SYSTEME DE SELECTION D'UN CANAL DE TELEVISION

(30) Priority: 30.12.1999 US 475933
(43) Date of publication of application: 23.10.2002
(60) Divisional application: 06008642.8
(73) Proprietor: America Online, Inc., Dulles, VA 20166 (US)
(72) Inventor: KIRSH, Laurence, F., Herndon, VA 20170 (US); COOPER, Robert, M., Arlington, VA 22207 (US); SILVA, Carlos, A., Jr., Potomac, MD 20854 (US); ESCOBAR, George, D., Purcellville, VA 20132 (US)
(74) Representative: Howe, Steven
(86) International application number: PCT/US2000/034367
(87) International publication number: WO 2001/050742

(56) References cited:
- EP-A- 0 854 645
- WO-A-01/10128
- PATENT ABSTRACTS OF JAPAN vol. 2000, no. 02, 29 February 2000 (2000-02-29) -& JP 11 308549 A (SONY CORP), 5 November 1999 (1999-11-05)
- PATENT ABSTRACTS OF JAPAN vol. 1999, no. 09, 30 July 1999 (1999-07-30) -& JP 11 110394 A (TOSHIBA CORP), 23 April 1999 (1999-04-23)
- PATENT ABSTRACTS OF JAPAN vol. 1999, no. 10, 31 August 1999 (1999-08-31) -& JP 11 143891 A (TOSHIBA CORP), 28 May 1999 (1999-05-28)

## Description

### Technical Field

This invention relates to selecting a television channel.

### Background

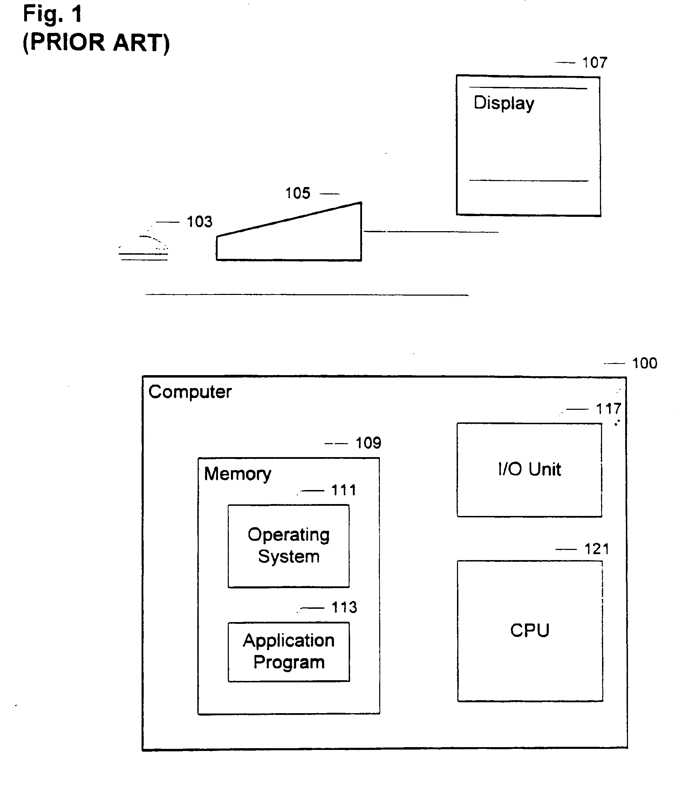

The computer system illustrated in Fig. 1 represents a typical hardware setup for executing software that allows a user to perform tasks such as communicating with other computer users, accessing various computer resources, and viewing, creating, or otherwise manipulating electronic content -- that is, any combination of text, images, movies, music or other sounds, animations, 3D virtual worlds, and links to other objects. The system includes various input/output (I/O) devices (mouse 103, keyboard 105, display 107) and a general purpose computer 100 having a central processor unit (CPU) 121, an I/O unit 117 and a memory 109 that stores data and various programs such as an operating system 111, and one or more application programs 113.

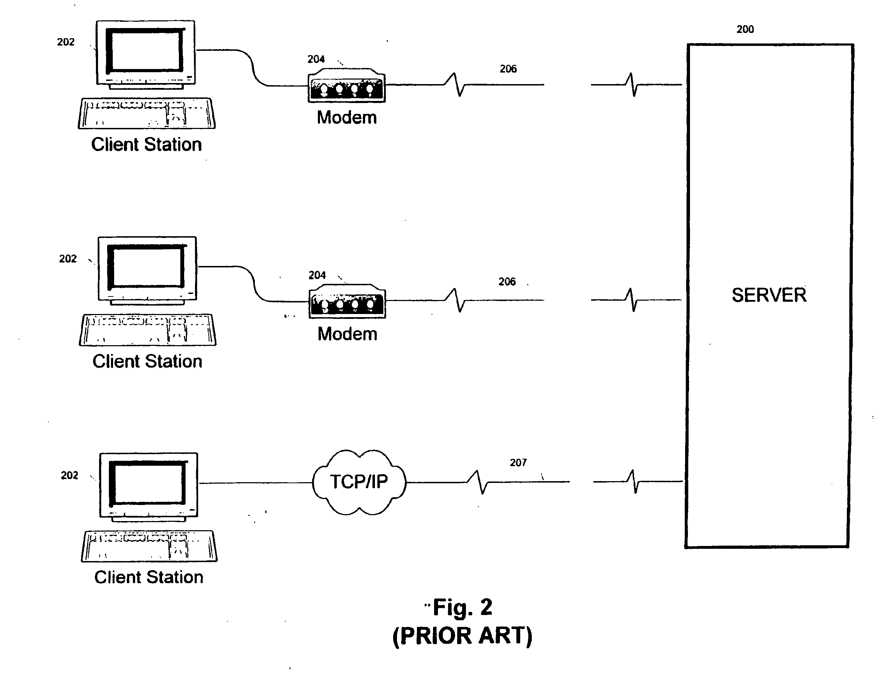

As shown in Fig. 2, a user of a computer system can access electronic content or other resources either stored locally at the user's own client system 202 (e.g., a personal or laptop computer) or remotely at one or more server systems 200. An example of a server system is a host computer that provides subscribers with online computer services such as e-mail and Internet access. Users of a host computer's online services typically communicate with one or more central server systems 200 through client software executing on their respective client systems 202.

In practice, a server system 200 typically will not be a single monolithic entity but rather will be a network of interconnected server computers, possibly physically dispersed from each other, each dedicated to its own set of duties and/or to a particular geographical region. In such a case, the individual servers are interconnected by a network of communication links, in known fashion. One such server system is "America Online 4.0" from America Online, Incorporated of Virginia.

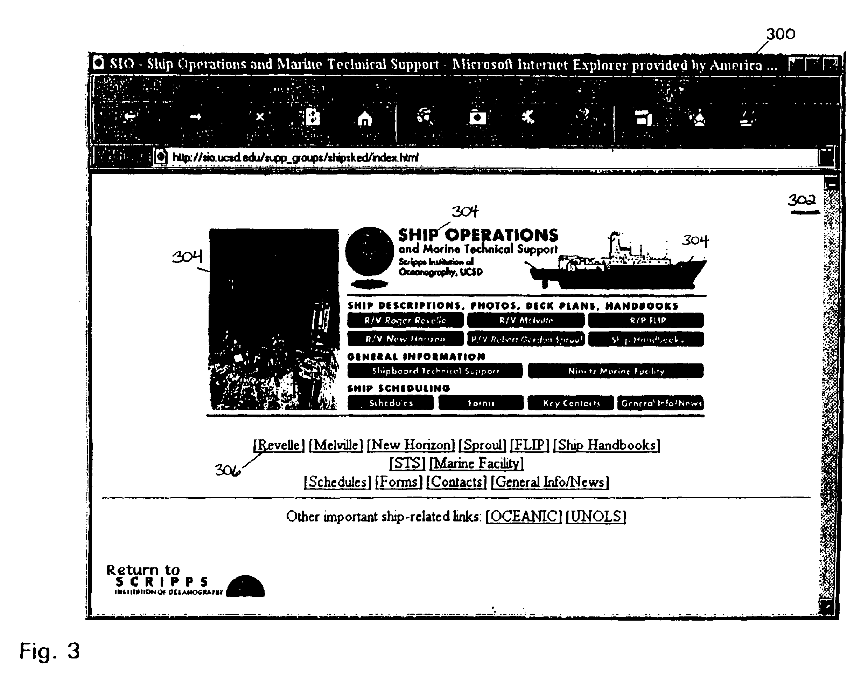

Fig. 3 is a screen shot of a "browser" application 300 (Internet Explorer) displaying a typical HTML document, or web page 302. A "browser" is an example of client software that enables users to access and view electronic content stored either locally or remotely, such as in a network environment (local area network (LAN), intranet, Internet). A browser typically is used for displaying documents described in Hyper-Text Markup Language (HTML) and stored on servers connected to a network such as the Internet.

A user instructs a browser to access an HTML document, or web page, by specifying a network address -- or Uniform Resource Locator (URL) -- at which a desired document resides. In response, the browser contacts the corresponding server hosting the requested web page, retrieves the one or more files that make up the web page, and then displays the web page in a window on the user's computer screen.

As shown in Fig. 3, a single web page may be composed of several different files potentially of different data types 304 (e.g., text, images, virtual worlds, sounds, movies, etc.). In addition, a web page can includes links 306, or pointers, to other resources (e.g., web pages or individual files) available on the network. Each link has an associated URL pointing to a location on the network. When a user clicks on, or otherwise selects a displayed link, the browser automatically will retrieve the web page corresponding to the link's associated URL and display it to the user.

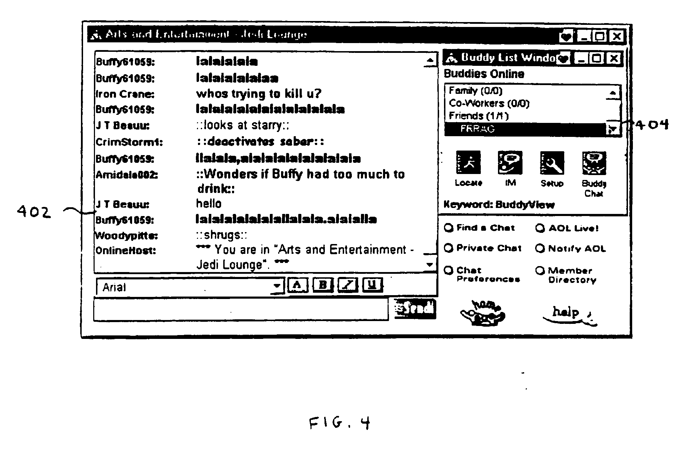

As shown in Fig. 4, some server systems offer chat rooms that display user messages in real time. Client chat room software (e.g., America Online 4.0 and Internet Relay Chat) depicts a text window 402 that displays each message submitted by users visiting the chat room. The client software also provides controls for entering a message and submitting the entered messages to the server system. The server system broadcasts each submitted message to the other chat room users for display on their respective text windows 402. Typically, chat rooms are named for discussion topics to help users to find chat rooms of interest.

Fig. 4 also shows a list of users 404 known as a "buddy list". A user creates a buddy list by entering the names of other server system users (e.g., friends, family, or co-workers). The server can notify the user when the users in the buddy list log-on to the server system. The server can also provide other information such as which chat room the user is currently visiting.

Recently, a special purpose computer referred to as a "set-top box" has been developed and used in connection with standard television (TV) sets for viewing web pages on the Internet. The term set-top box derives from the usual placement of the device on top of a television. The term, however, should not be construed literally. That is, a set-top box may neither be a box nor be placed on top of a display. A set-top box essentially has the same basic components as the general purpose computer illustrated in Fig. 1, except that it also includes a TV tuner for receiving broadcast and/or cable TV signals. Users of such "web TV" systems can make dual usage of their TV sets -- that is, either to watch TV or to view web pages and otherwise "surf' the Internet. This is known from e.g. EP-A-0 854 645. It is furthermore known from this document to associate a URL with a television program.

The present inventors recognized that it would be desirable to create a link that automatically changes the channel of a set-top box when selected.

### Summary

Various implementations of the invention, as set out in the appended claims, may include one or more of the following features.

In general, in one aspect, the invention features a computer-implemented method of selecting a television of channels. The method includes receiving a link from a remote compute that includes a reference to a television channel feature, displaying the link, receiving user selection of the link, and selecting a television channel based on the link's reference to the television channel feature.

Embodiments may include one or more of the following features. The 5 television channel feature may be a channel number, a television network identifier, an identifier of a television program carried by a television channel, an identity of a person appearing in a television program carried by a television channel, and/or a type of television programming carried by a television channel (e.g, news, movie, sports, comedy, and drama).

Selecting a channel may include tuning a television tuner. Selecting may include determining whether a viewer has adequate privileges to view a channel. Such privileges may include television/movie ratings such as G (General Audience), PG (Parental Guidance Suggested), PG-13 (Parental Guidance suggested for those 13 or older), R (Restricted Audience), or X (Adult Audiences).

Selecting may include looking up the link reference in an electronic programming guide. The electronic programming guide may include data describing television programs offered at a particular time. The method may further include receiving the electronic programming guide, for example, from the television source and/or a network computer.

The link may be included in an e-mail message, in a message entered by a user in a chat room, in a web-page, and so forth. The link may include one or more instructions that causes software processing the link to display the link as text. The link may include one or more instructions that cause software processing the link to display the link as at least one graphic image.

The television source may be a cable television provider or a satellite television provider.

In general, in another aspect, the invention features a system that includes a computer network connection for receiving information from at least one networked computer that includes a link having a reference to a television channel feature. The system also includes a tuner that selects at least one television channel from a plurality of television channels offered by a television source, a processor, and a computer readable medium including instructions for causing the processor to receive user selection of the 5 link, and tune the tuner based on the reference to a television channel feature included in the user selected link.

In general, in another aspect, the invention features software in a computer-readable medium for selecting a television channel. The software includes instructions for causing a computer system to receive a link from a remote computer that includes a reference to a television channel feature, display the link, receive user selection of the link, and select a television channel based on the link's reference to the television channel feature.

In general, in another aspect, the invention features a computer-implemented method of managing channel selection in a web-based television (TV) environment. The method includes receiving information describing a TV content source at a remote location, determining a local TV content source based on the received information, and presenting content from the local TV program content source.

Embodiments may include the following feature. The determining may include mapping TV program data from one geographic market to another.

The invention may provide one or more of the following advantages. The links enable users to change the channel of a set-top box without consulting an electronic or paper TV guide. The link also enables users to "send" channels via the Internet without concern over differences in TV programming in different areas. The links offer TV networks a method of luring web-surfers to a television show. Additionally, the links more closely integrate the Internet/TV combination provided by set-top boxes.

The details of one or more embodiments are set forth in the accompanying drawings and the description below. Other features, objects, and advantages of the invention will be apparent from the description and drawings, and from the claims.

### Drawing Descriptions

Fig. 1 is a block diagram of a computer system.
Fig. 2 shows a typical network computing environment.
Fig. 3 shows a screen shot of a browser displaying a webpage.
Fig. 4 shows a screen shot of a chat room.
Fig. 5 is a block diagram of a set-top box.
Fig. 6 is a flow diagram illustrating transmission of a message including links that select a television channel.
Fig. 7 is a flow chart of a process for tuning a set-top box in response to user selection of a link.
Fig. 8 shows a diagram of a screen display including a chat control.
Fig. 9 shows a diagram of a screen display of chat room for a displayed TV show.
Fig. 10 is a flow chart of a process for assigning a user to a chat room based on the set-top box tuner.
Fig. 11 shows a screen display of a buddy list showing TV shows that users are watching.
Figs. 12A-12B are flow diagrams illustrating transmission of information to users on a buddy list.
Fig. 13 is a flow chart of a process for receiving viewing information relating to users on a buddy list.
Fig. 14 is a flow chart of a process for updating buddy list viewing information.

Like reference numbers and designations in the various drawings indicate like elements.

### Detailed Description

### The Set-Top Device

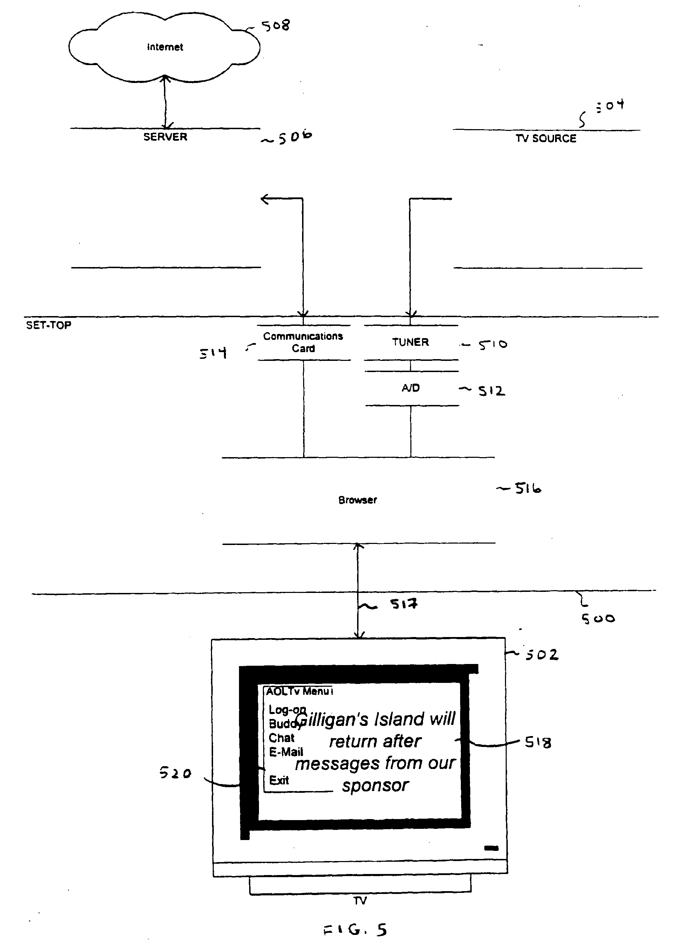

Fig. 5 shows a set-top box 500. The set-top box 500 receives TV signals from a TV source 504 such as a cable, satellite, or conventional TV provider. The box 500 includes a tuner 510 to select a TV channel for viewing. The selected TV channel may be digital in the case of a satellite TV source or analog in the case of most cable TV sources. The box 500 can include an analog-to-digital converter 512 to permit digital processing of the TV images regardless of the TV source.

The box 500 includes a network communication card 514 to communicate with a network server 506 such as an ISP (Internet Service Provider). The box 500 also includes browser client software 516 for communicating with the server, for example, by sending and receiving HTTP (HyperText Transfer Protocol) messages. Additionally, the box 500 includes communication protocol software (e.g., TCP/IP) and an operating system.

The box 500 constructs a display that can include information received from the server 506 and/or from the TV source 504. The box 500 sends the constructed display to a TV 502 or monitor via an output port 517. In one embodiment, the browser 516 (e.g., Liberate's TV Navigator) integrates server and TV information by processing an HTML-like (HyperText Manipulation Language) tag (e.g. <IMG SRC = "TV" x=0 y=0>) that instructs the browser 516 to place incoming TV images on the screen at specified coordinates. By modifying a received web-page to include this tag, the browser 516 can display the TV data received from the TV source 504 in conjunction with information provided by the server 506. Alterations to the screen, such as adding user interface controls or moving and/or resizing the TV image also can be performed by altering instructions of a web-page displayed by the browser. The box 500 may store a default web-page that makes the received TV signal a full-screen background image 518 with overlayed user interface controls 520. The controls 520 can correspond to functions such as initiating a session with the server 506.

### Tuning Links

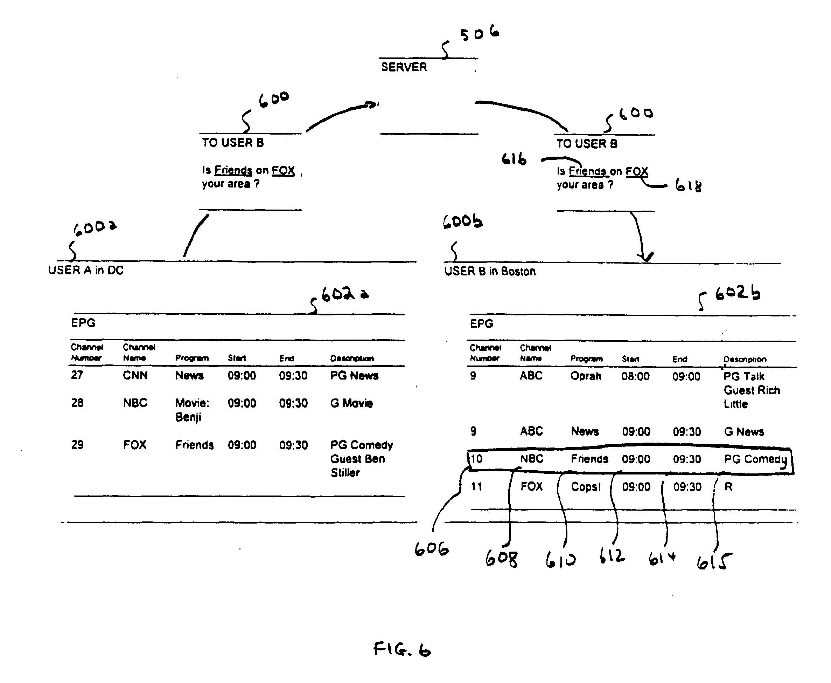

Fig. 6 shows a set-top box 600a in Washington, D.C. sending a message 600 to a set-top box 600b in Boston via the server 506. The message 600 could be part of an e-mail message, a chat room entry, an instant message, etc. The message includes links 618 that can control the tuner of a set-top box. Each link 618, 620 can include a reference to a television channel feature (e.g., "<A TVREF=FOX>") and instructions for displaying the link on a display (e.g,. "<UNDERLINE> FOX </UNDERLINE>"). Like conventional links, the link 618, 620 may by represented by one or more graphic images instead of simple text. For example, the link 618, 620 may appear as a web banner, for example, advertising a TV show that is displayed when a user visits a URL.

Unlike traditional links that cause a browser to load specified files or an Internet URL (Universal Resource Locator) when selected, the links 618 in the message 600 can change the channel of the set-top box. This enables friends to exchange messages that include links to a particular network 618 or TV show 616. When selected, the browser tunes the set-top box to the channel corresponding to the network or show specified by a link.

The link may, but need not, refer to a specific channel (e.g., "Jim, turn to channel 38"). In fact, referring to a specific channel may be undesirable as different geographic locations may offer a given TV network on different channels. For example, an NBC affiliate in Boston may be on channel "10" while the D.C. NBC affiliate broadcasts on channel "28". Additionally, channel numbers may vary based on the TV source. That is, the D.C. NBC affiliate may broadcast in the frequency band for channel "28" but may be programmed and presented to viewers as channel "4" by a D.C. cable TV company. Thus, providing a link that references a network instead of a particular channel increases the likelihood the link will appropriately change the channel when transmitted to users that receive TV signals from different sources.

However, merely specifying a network may also be undesirable because TV schedules typically vary from location to location. For example, an NBC TV network affiliate in Boston may broadcast a movie while the NBC TV network affiliate in Washington D.C. broadcasts a talk show. Further, the same show may be shown by different networks in different locations. That is, in some areas a show may appear on the ABC television network while in other locations the same show is broadcast by FOX networks. Finally, a given show may be broadcast at different times in different time zones. To account for these variations, set-top software (e.g., extensions to the browser) can determine a channel corresponding to a link based on a wide variety of channel features instead of the channel number or network name, for example, by using an electronic programming guide (EPG).

As shown in FIG. 6, the set-top boxes 600A, 600B have received different EPGs 602A, 602B. An EPG is essentially an electronic version of a TV guide. Different EPGs can include different information. For example, an EPG can include a show title 610, channel number 606, network 608, and start 612 and stop 614 times of different TV programs. The EPG also can include other data such as ratings (e.g., "R" and "PG-13") and/or a brief description of the show such as its type (e.g., "sitcom" or "drama") and/or actors that appear in the show. In one embodiment, broadcasters transmit EPG guides to set-top boxes using the vertical blanking interval (VBI) of traditional video signals. Typically, information included in the VBI does not affect the image displayed on a TV. Thus, the VBI provides a convenient buffer for unobtrusively transmitting information to set-top boxes 600A, 600B. In other embodiments, the set-top boxes 600A, 600B can receive an EPG from the server 506 based on the billing address of the set-top box user or a local server access phone number dialed by the set-top box. In yet other embodiments, the EPG may be transmitted by satellite.

A set-top box 500B can use the EPG information to select a channel corresponding to a particular link from the shows currently available from the TV source. For example, in Fig. 6, the set-top box 500B in Boston has received message including a link 616 referring to the TV show "Friends" from a user in D.C. Looking up the show "Friends" in the "program" column of the Boston set-top box's 600B EPG 602B yields a tuning channel of "10".

The message also includes a link 618 referring to the FOX network. Selection of this link and the ensuing lookup of "FOX" in the "channel name" column of the EPG 602B tunes to the Boston set-top box 500B to channel "11".

In general, the links can refer to any information included in the EPG such as actors or actresses appearing in shows (e.g., "Meryl Streep is a very good actress"). Software can examine each column of the EPG until a match (or a near match) is found and can change the channel correspondingly. In this example, the set-top box would search for a show starring Meryl Streep, and, if found, would tune the TV to channel for that show.

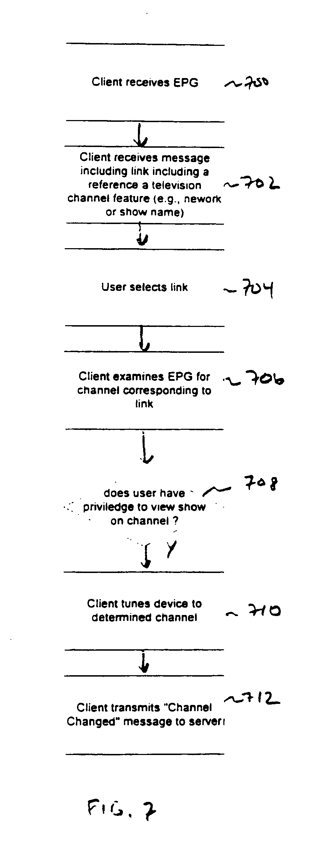

Fig. 7 shows a process for tuning the set-top system based on a received link. After receiving an EPG 700, user selection of a link 704 causes set-top box software to determine tuning information corresponding to the link 706, for example, by looking-up the information in an EPG. The software tunes 710 the set-top box to the determined tuning channel.

In some embodiments, the process may enforce parental controls 708 over the type of programming different family members can view. For example, America Online enables a parent to create user names for family members and associate different privileges to each of the user names. For example, a parent can configure the family member accounts such that a child has privilege only to see TV programs having a "G" (General) rating while a teenager has privileges to see TV programs having a "G" or "PG" (Parental Guidance suggested) rating.

Potentially, a given show will not be immediately available when a user selects a link. For example, a user may select a TV show's link included an e-mail message written much earlier in the day. In this case, a lookup for the show in the current time period would fail. The set-top box, however, can store the link and remind a user and/or automatically tune the set-top box when the linked TV show is scheduled for broadcast.

In some embodiments, the set-top box transmits 712 a message to the server whenever a user changes channels. This enables the server to track viewers and supports features such as TV buddy lists and TV chat rooms.

### TV Chat Rooms

The display shown in FIG. 9 illustrates how a display can simultaneously present a television program and a chat room. The television program and chat room may be independent. That is, a user could change TV shows with changing chat rooms and vice-versa.

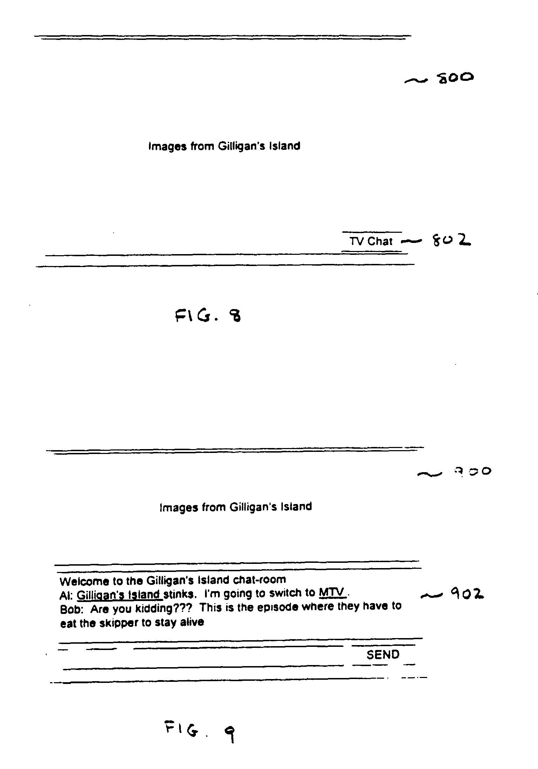

In other embodiments, software may control the chat room the user is a member of so that it corresponds to the viewed television program. For example, as shown in FIG. 8, a display may include a region for displaying a received TV signal 800 (e.g., Gilligan's Island) and a "TV chat" control 802. Selecting the control automatically places a user in a chat room corresponding to the particular TV show. As shown in Fig. 9, when a user watching "Gilligan's Island" selects the TV chat control, the server places the user in a "Gilligan's Island" chat room 902 with other users viewing the show. The users can then share their comments on the show in real time by submitting messages to the server for display in the chat room window. The browser can configure the display such that the chat room text window 902 and the TV show display 900 can be viewed simultaneously.

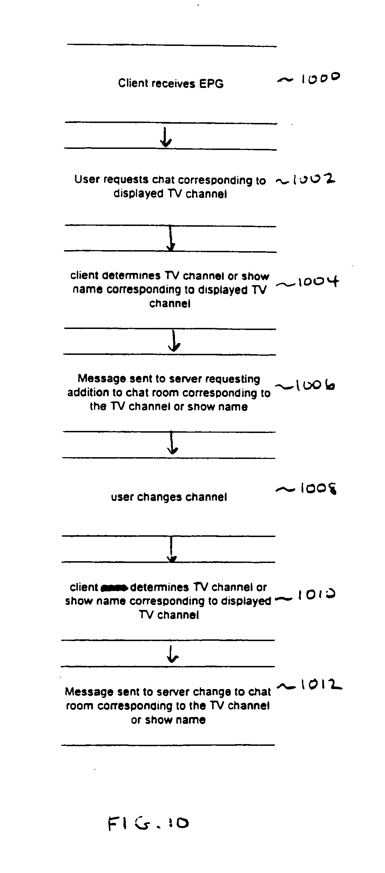

Fig. 10 shows a process for automatically assigning users to a chat room based on the TV show a viewer is currently watching. Like the processing of links described above, the chat room assignment process can use information in the EPG 1000 to determine the television programming a user is viewing. When a user selects a TV chat button or other user interface control 1002, the process determines the currently tuned channel (e.g., channel "38"). The process then uses the EPG to identify the show corresponding to this channel 1004. For example, the process can use an EPG to lookup the TV show being broadcast on channel "38" at the current time. After identifying the TV show 1006, the set-top box can transmit a request to join a chat for the identified TV show 1006. The message may include the name of the TV show, the channel number, the network or other information the server can use to determine which show the viewer is watching. The server can then place the user in the chat room associated with that TV show.

As described, each time the user changes channels 1008, the set-top box can transmit a message to the server 1010, 1012 indicating the new channel the viewer is watching. If the user is already in a TV chat room, the server can move the user to chat room corresponding to the new channel. For example, if the user tunes from "Love Boat" to "Fantasy Island", the user can be moved from the Love Boat chat room to the Fantasy Island chat room. The client may wait a short period of time before transmitting a "Channel Changed" message to see if the user changes channel again quickly. This reduces the number of messages produced when a viewer "channel surfs" for an interesting program.

### Buddy List

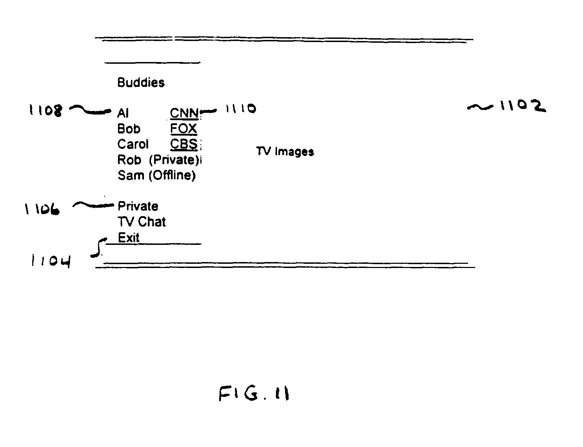

Fig. 11 shows a set-top box display that includes a TV program 1102 and a TV-enhanced buddy list 1110. Like conventional buddy lists, a user can define a list of server system user names. In addition to showing whether users on the list are currently logged on to the server, the enhanced buddy-list shows the TV show or network 1110 each listed buddy 1108 is watching. As shown, the TV show and/or network 1110 can be displayed as a link. By selecting the link, a user can watch the same show that a friend is watching.

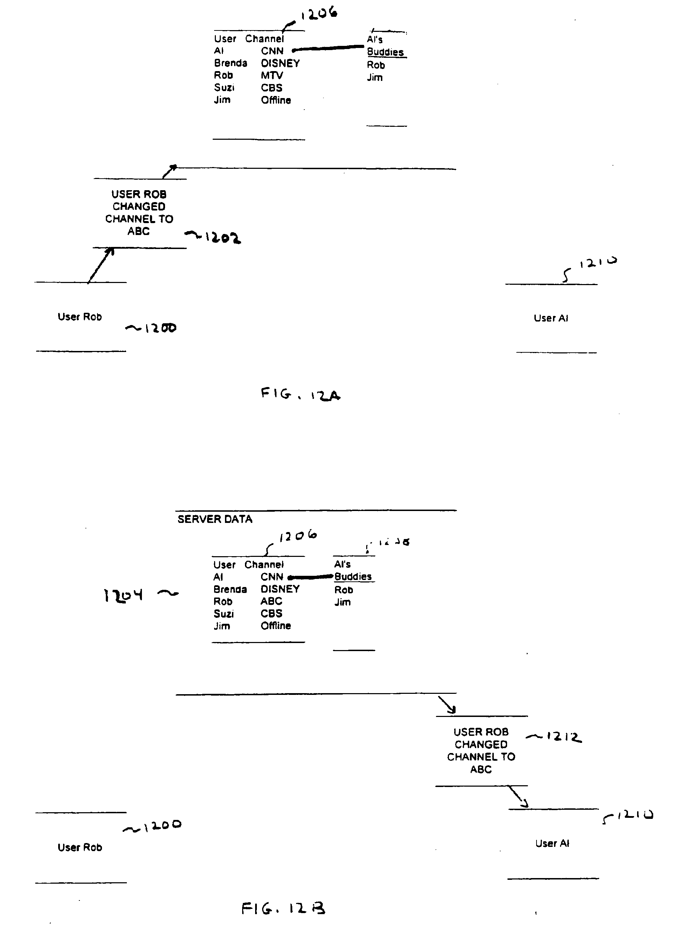

Figs. 12A and 12B shows server data 1204 used to provide the enhanced buddy list functions. The data 1204 includes a list 1206 of logged-in users and the TV show and/or network that each user is currently watching. The server also stores a buddy list 1208 for each user. The buddy list 1208 may be permanently stored on the server 1204 or transmitted to the server 1204 by a set-top box when a user logs-on. As shown in Fig. 12A, when a user changes channels, set-top box software transmits a message to the server including the name of the show and/or the network the user is presently viewing. As shown in Fig 12B, the server 1204 updates the user list 1206 to reflect the new viewing information. The server also transmits a message 1212 to each logged-in user that included the channel-changing user in his or her list.

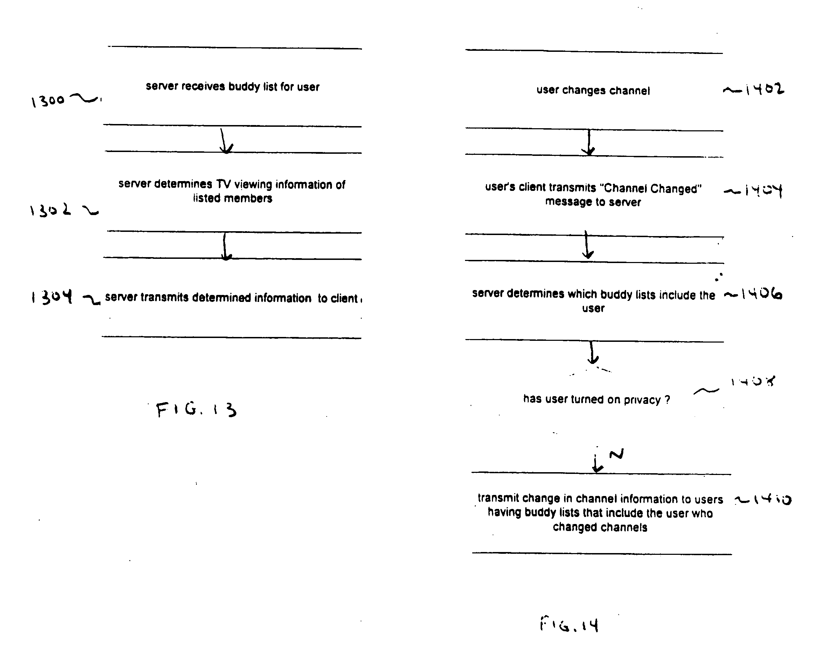

Fig. 13 shows a process for providing buddy lists that display the show or network a user is viewing. After a user logs-on, the set-top box software transmits the user's buddy list 1300 to the server. The server responds by sending the set-top box TV viewing information for each member of the user's buddy list 1302, 1304. The transmitted information, however, will quickly be outdated as members of the buddy list log-on and off, change channels, or turn on a "privacy" feature that stops the server from broadcasting the TV show they are watching.

Fig. 14 shows a process for updating the buddy list information initially transmitted. As each user changes channels 1402, the user's set-top box transmits a message to the server describing the change 1404. The server uses these messages to update its user list 1406. After updating 1404, the server broadcasts 1410 the change to each logged-on user who included the channel changing user in their buddy list. Viewers can turn off this feature if they do not want others to see the name of the TV show they are watching.

A network user may have more than one buddy list. For example, the user may specify other users for a general buddy list, a buddy list for a particular network, and/or a buddy list for a particular television show or sports team. The server may provide chat rooms for members of a user's buddy list. For example, a user may click a "buddy chat" button on a graphical user interface and be assigned to a chat room for the buddies on the list. The graphical user interface may display different buddy lists for user selection based on the show being viewed. For example, when a user tunes to "I Love Lucy", the user's "I Love Lucy" buddies will appear with an option for a buddy chat for those users.

The techniques, methods and systems described here may find applicability in any computing or processing environment in which electronic content may be viewed, accessed or otherwise manipulated. Implementations may vary considerably. For example, in some embodiment, EPGs for each TV source are stored centrally at the server instead of being distributed to each set-top box. In this embodiment, the EPG lookup functions are handled by messages exchanged by the server and clients. In general, tasks process may be distributed between client and server in a variety of ways.

Various implementations of the systems and techniques described here may be realized in digital electronic circuitry, or in computer hardware, firmware, software, or in combinations thereof. A system or other apparatus that uses one or more of the techniques and methods described here may be implemented as a computer-readable storage medium, configured with a computer program, where the storage medium so configured causes a computer system to operate on input and/or generate output in a specific and predefined manner. Such a computer system may include one or more programmable processors that receive data and instructions from, and transmit data and instructions to, a data storage system, and suitable input and output devices.

Each computer program may be implemented in a high-level procedural or object-oriented programming language, or in assembly or machine language if desired; and in any case, the language may be a compiled or interpreted language. Suitable processors include, by way of example, both general and special purpose microprocessors.

Generally, a processor will receive instructions and data from a read-only memory and/or a random access memory. Storage devices suitable for tangibly embodying computer program instructions and data include all forms of non-volatile memory, including semiconductor memory devices, such as EPROM, EEPROM, and flash memory devices; magnetic disks such as internal hard disks and removable disks; magneto-optical disks; and CD-ROM disks.

Any of the foregoing may be supplemented by, or implemented in, specially-designed ASICs (application- specific integrated circuits).

## Claims

1. A computer-implemented method of selecting one of a plurality of channels offered by a television source, the method comprising causing a computer system to:
receive a message including a link from a remote computer, the link including a reference to a television channel feature wherein the message is one of an email message, an instant message, or a message created by a user in a chat room;
display the link;
receive a user selection of the link; and
select a television channel corresponding to the user selected link's reference to the television channel feature in response to the user selection of the link.

2. The method of claim 1 wherein the television channel feature comprises one of a channel number, a television network identifier, an identifier of a television program carried by a television channel, an identity of a person appearing in a television program carried by a television channel, and a type of television programming carried by a television channel.

3. The method of claim 2, wherein the television channel feature comprises a type of television programming carried by a television channel comprising at least one of the following: news, movie, sports, comedy, and drama.

4. The method of any one of the preceding claims, wherein selecting includes tuning a television tuner.

5. The method of any one of the preceding claims, wherein selecting includes determining whether a viewer has adequate privileges to view a channel.

6. The method of claim 5 wherein the privileges comprise privileges for viewing G (General Audience), PG (Parental Guidance Suggested), PG-13 (Parental Guidance suggested for those 13 or older), R (Restricted Audience), or X (Adult Audiences).

7. The method of any one of the preceding claims, wherein selecting includes looking up the link reference in an electronic programming guide.

8. The method of claim 7, wherein electronic programming guide comprises data describing television programs offered at a particular time.

9. The method of claim 7 or claim 8, further comprising receiving the electronic programming guide.

10. The method of claim 9, wherein receiving an electronic programming guide comprises receiving an electronic programming guide from the television source.

11. The method of claim 9 wherein receiving an electronic programming guide comprises receiving an electronic programming guide from a network computer.

12. The method of any one of the preceding claims, wherein the link includes one or more instructions that causes software processing the link to display the link as text, and/or at least one graphic image.

13. The method of any one of the preceding claims, wherein the television source comprises one of the following: a cable television provider, a broadcast television provider, or a satellite television provider.

14. A system comprising:
a computer network connection for receiving a message (600) from at least one networked computer, the message (600) including a link (618,620), the link (618,620) including a reference to a television channel feature wherein the message (600) is one of an email message, an instant message, or a message created by a user in a chat room;
a tuner that selects at least one television channel from a plurality of television channels offered by a television source;
a processor; and
a computer readable medium including instructions for causing the processor to:
receive user selection of the link (618,620); and
tune the tuner in correspondence with the reference to a television channel feature included in the user selected link (618,620).

15. The system of claim 14, wherein the television channel feature comprises at least one of a channel number, a television network name, a name of a television program carried over a television channel, a name of an actor appearing in a television program carried over a television channel, and a type of television program carried over a television channel.

16. The system of claim 14, wherein the television channel feature comprises the type of television program, comprising at least one of the following: news, movie, sports, comedy, and drama.

17. The system of any one of claims 14 to 16, wherein the instructions cause the computer system to determine whether a viewer has adequate privileges to view a channel.

18. The system of claim 17 wherein the privileges comprise privileges for viewing G(General Audience), PG (Parental Guidance Suggested), PG13 (Parental Guidance suggested for those 13 or older), R (Restricted Audience), or X (Adult Audiences).

19. The system of any one of claims 14 to 18, wherein the instructions that tune the tuner include instructions for looking up the link reference in an electronic programming guide.

20. The system of any one of claims 14 to 19, wherein the television source comprises one of a cable television provider or a satellite television provider.

21. The system of any one of claims 14 to 20, further comprising an output for outputting images for display.

22. Software in a computer-readable medium for selecting a television channel, the software comprising instructions for causing a computer system to:
receive a message (600) including a link (618,620) from a remote computer, the link (618,620) including a reference to a television channel feature wherein the message (600) is one of an email message, an instant message, or a message created by a user in a chat room;
display the link (618,620);
receive user selection of the link (618,620); and
select a television channel corresponding to the user selected link's reference to the television channel feature.

23. An apparatus comprising:
an interface configured to receive a message (600) including a link (618,620) from a remote computer, the link (618,620) including a reference to a television channel feature wherein the message (600) is one of an email message, an instant message, or a message created by a user in a chat room;
a processor configured to generate a display including the link (618,620); to receive an indication of a user selection of the link (618,620), and to select a television channel corresponding to the user selected link's reference to the television channel feature; and
an interface configured to output the display.

24. The apparatus of claim 23 wherein the television channel feature comprises one or more of a channel number, an identifier of a television program, an identity of a person associated with the television channel, and a type of television programming associated with television channel.

## Patentansprüche

1. Rechnerimplementiertes Verfahren zum Auswählen von einem aus mehreren Kanälen, die von einer Fernsehquelle angeboten werden, wobei das Verfahren den Schritt umfasst, ein Computersystem zu Folgendem zu veranlassen:
Empfangen einer Nachricht, die eine Link von einem Ferncomputer enthält, wobei die Link eine Referenz zu einem Fernsehkanalmerkmal beinhaltet, wobei die Nachricht eine Email-Nachricht, eine Sofortnachricht (Instant Message) oder eine von einem Benutzer in einem Chatroom erzeugte Nachricht ist;
Anzeigen der Link;
Empfangen einer Benutzerauswahl der Link; und
Wählen eines Fernsehkanals, der der Referenz der vom Benutzer gewählten Link zu dem Fernsehkanalmerkmal entspricht, als Reaktion auf die Benutzerauswahl der Link.

2. Verfahren nach Anspruch 1, wobei das Fernsehkanalmerkmal eine Kanalnummer, eine Fernsehnetzkennung, eine Kennung eines von einem Fernsehkanal übertragenen Fernsehprogramms, eine Identität einer Person, die in einem von einem Fernsehkanal übertragenen Fernsehprogramm erscheint, oder einen Typ von Fernsehprogrammierung umfasst, die von einem Fernsehkanal übertragen wird.

3. Verfahren nach Anspruch 2, wobei das Fernsehkanalmerkmal einen Fernsehprogrammiertyp umfasst, der von einem Fernsehkanal übertragen wird, der Nachrichten, Kinofilme, Sport, Komödien und/oder Spielfilme beinhaltet.

4. Verfahren nach einem der vorherigen Ansprüche, bei dem das Wählen das Einstellen eines Fernsehtuners beinhaltet.

5. Verfahren nach einem der vorherigen Ansprüche, wobei das Wählen der Ermittlung beinhaltet, ob ein Zuschauer genügend Rechte zum Betrachten eines Kanals hat.

6. Verfahren nach Anspruch 5, wobei die Rechte Rechte zum Betrachten von G (General Audience - für alle Altersstufen geeignet), PG (Parental Guidance Suggested - Begleitung eines Erwachsenen empfohlen), PG-13 (Parental Guidance suggested for those 13 or older - Begleitung eines Erwachsenen für Personen ab 13 Jahren empfohlen), R (Restricted Audience - unter 17 Jahren nur in Begleitung eines Erwachsenen) oder X (Adult Audiences - nur für Erwachsene) umfassen.

7. Verfahren nach einem der vorherigen Ansprüche, wobei das Wählen das Nachschlagen der Link-Referenz in einem elektronischen Programmführer beinhaltet.

8. Verfahren nach Anspruch 7, wobei der elektronische Programmführer Daten umfasst, die zu einer bestimmten Zeit angebotene Fernsehprogramme beschreiben.

9. Verfahren nach Anspruch 7 oder Anspruch 8, das ferner das Empfangen des elektronischen Programmführers umfasst.

10. Verfahren nach Anspruch 9, wobei das Empfangen eines elektronischen Programmführers das Empfangen eines elektronischen Programmführers von der Fernsehquelle beinhaltet.

11. Verfahren nach Anspruch 9, wobei das Empfangen eines elektronischen Programmführers das Empfangen eines elektronischen Programmführers von einem Netzwerkcomputer beinhaltet.

12. Verfahren nach einem der vorherigen Ansprüche, wobei die Link einen oder mehrere Befehle beinhaltet, die eine Software-Verarbeitung der Link bewirken, um die Link als Text und/oder wenigstens ein Graphikbild anzuzeigen.

13. Verfahren nach einem der vorherigen Ansprüche, wobei die Fernsehquelle eines der Folgenden umfasst: einen Kabelfernseh-Provider, einen Rundfunkfernseh-Provider oder einen Satellitenfernseh-Provider.

14. System, das Folgendes umfasst:
einen Computernetzanschluss zum Empfangen' einer Nachricht (600) von wenigstens einem vernetzten Computer, wobei die Nachricht (600) eine Link (618, 620) beinhaltet, wobei die Link (618, 620) eine Referenz zu einem Fernsehkanalmerkmal beinhaltet, wobei die Nachricht (600) eine Email-Nachricht, eine Sofortnachricht (Instant Message) oder eine von einem Benutzer in einem Chatroom erzeugte Nachricht ist;
einen Tuner, der wenigstens einen Fernsehkanal aus mehreren von einer Fernsehquelle angebotenen Fernsehkanälen auswählt;
einen Prozessor; und
ein rechnerlesbares Medium mit Befehlen, um den Prozessor zu Folgendem zu veranlassen:
Empfangen einer Benutzerwahl der Link (618, 620); und
Einstellen des Tuners im Einklang mit der Referenz zu einem Fernsehkanalmerkmal, das in der vom Benutzer gewählten Link (618, 620) enthalten ist.

15. System nach Anspruch 14, wobei das Fernsehkanalmerkmal eine Kanalnummer, einen Fernsehnetznamen, einen Namen eines über einen Fernsehkanal übertragenen Fernsehprogramms, einen Namen eines Schauspielers, der in einem über einen Fernsehkanal übertragenen Fernsehprogramm erscheint und/oder einen Typ eines über einen Fernsehkanal übertragenen Fernsehprogramms umfasst.

16. System nach Anspruch 14, wobei das Fernsehkanalmerkmal den Fernsehprogrammtyp umfasst, der wenigstens eines der Folgenden beinhaltet: Nachrichten, Kinofilme, Sport, Komödien und Spielfilme.

17. System nach einem der Ansprüche 14 bis 16, wobei die Befehle das Computersystem veranlassen zu ermitteln, ob ein Zuschauer genügend Rechte zum Betrachten eines Kanals hat.

18. System nach Anspruch 17, wobei die Rechte Rechte zum Betrachten von G (General Audience - für alle Altersstufen geeignet), PG (Parental Guidance Suggested - Begleitung eines Erwachsenen empfohlen), PG-13 (Parental Guidance suggested for those 13 or older - Begleitung eines Erwachsenen für Personen ab 13 Jahren empfohlen), R (Restricted Audience - unter 17 Jahren nur in Begleitung eines Erwachsenen) oder X (Adult Audiences - nur für Erwachsene) umfassen.

19. System nach einem der Ansprüche 14 bis 18, wobei die Befehle, die den Tuner einstellen, Befehle zum Nachschlagen der Link-Referenz in einem elektronischen Programmführer beinhalten.

20. System nach einem der Ansprüche 14 bis 19, wobei die Fernsehquelle einen Kabelfernseh-Provider oder einen Satellitenfernseh-Provider umfasst.

21. System nach einem der Ansprüche 14 bis 20, das ferner einen Ausgang zum Ausgeben von Bildern zur Anzeige umfasst.

22. Software in einem rechnerlesbaren Medium zum Wählen eines Fernsehkanals, wobei die Software Befehle umfasst, um ein Computersystem zu Folgendem zu veranlassen:
Empfangen einer Nachricht (600) mit einer Link (618, 620) von einem Ferncomputer; wobei die Link (618, 620) eine Referenz auf ein Fernsehkanalmerkmal beinhaltet, wobei die Nachricht (600) eine Email-Nachricht, eine Sofortnachricht (Instant Message) oder eine von einem Benutzer in einem Chatroom erzeugte Nachricht ist;
Anzeigen der Link (618, 620);
Empfangen einer Benutzerauswahl der Link (618, 620); und
Auswählen eines Fernsehkanals, der der Referenz des vom Benutzer gewählten Link auf das Fernsehkanalmerkmal entspricht.

23. Vorrichtung, die Folgendes umfasst:
eine Schnittstelle, die zum Empfangen einer Nachricht (600) konfiguriert ist, die eine Link (618, 620) von einem Ferncomputer enthält, wobei die Link (618, 620) eine Referenz auf ein Fernsehkanalmerkmal beinhaltet, wobei die Nachricht (600) eine Email-Nachricht, eine Sofortnachricht (Instant Message) oder eine von einem Benutzer in einem Chatroom erzeugte Nachricht ist;
einen Prozessor, der zum Erzeugen einer Anzeige konfiguriert ist, die die Link (618, 620) beinhaltet, um eine Anzeige einer Benutzerauswahl der Link (618, 620) zu empfangen und um einen Fernsehkanal zu wählen, der der Referenz der vom Benutzer gewählten Link auf das Fernsehkanalmerkmal entspricht; und
eine Schnittstelle, die zum Ausgeben der Anzeige konfiguriert ist.

24. Vorrichtung nach Anspruch 23, wobei das Fernsehkanalmerkmal eine Kanalnummer, eine Kennung eines Fernsehprogramms, eine Identität einer mit dem Fernsehkanal assoziierten Person und/oder einen Typ von mit dem Fernsehkanal assoziierter Fernsehprogrammierung umfasst.

## Revendications

1. Procédé exécuté par ordinateur permettant de sélectionner l'une d'une pluralité de chaînes proposées par une source de télévision, le procédé comportant amener un système informatique à :
recevoir un message comprenant un lien en provenance d'un ordinateur à distance, le lien comprenant une référence à une caractéristique de la chaîne de télévision où le message est l'un d'un message électronique, d'un message instantané, ou d'un message créé par un utilisateur dans un site de bavardage ;
afficher le lien ;
recevoir une sélection du lien par l'utilisateur ; et
sélectionner une chaîne de télévision correspondant à la référence du lien sélectionné par l'utilisateur à la caractéristique de la chaîne de télévision en réponse à la sélection du lien par l'utilisateur.

2. Procédé selon la revendication 1, dans lequel la caractéristique de la chaîne de télévision comporte l'un d'un numéro de chaîne, d'un identificateur de réseau de télévision, d'un identificateur d'un programme de télévision acheminé par une chaîne de télévision, d'une identité d'une personne figurant dans un programme de télévision acheminé par une chaîne de télévision et d'un type de programmation de télévision acheminé par une chaîne de télévision.

3. Procédé selon la revendication 2, dans lequel la caractéristique de la chaîne de télévision comporte un type de programmation de télévision acheminé par une chaîne de télévision comportant au moins l'un des suivants : informations, cinéma, sport, comédie, et émission dramatique.

4. Procédé selon l'une quelconque des revendications précédentes, dans lequel la sélection comprend régler un syntoniseur de télévision.

5. Procédé selon l'une quelconque des revendications précédentes, dans lequel la sélection comprend déterminer si un spectateur a ou non les privilèges appropriés pour regarder une chaîne.

6. Procédé selon la revendication 5, dans lequel les privilèges comportent les privilèges permettant de regarder G (tous publics), PG (accord des parents souhaitable), PG-13 (interdit aux moins de 13 ans sans autorisation parentale), R (interdit aux moins de 17 ans), ou X (interdit aux moins de 18 ans).

7. Procédé selon l'une quelconque des revendications précédentes, dans lequel la sélection comprend consulter la référence du lien dans un guide de programmation électronique.

8. Procédé selon la revendication 7, dans lequel le guide de programmation électronique comporte des données permettant de décrire les programmes de télévision proposés à une heure donnée.

9. Procédé selon la revendication 7 ou la revendication 8, comportant par ailleurs la réception du guide de programmation électronique.

10. Procédé selon la revendication 9, dans lequel la réception d'un guide de programmation électronique comporte la réception d'un guide de programmation électronique en provenance de la source de télévision.

11. Procédé selon la revendication 9, dans lequel la réception d'un guide de programmation électronique comporte la réception d'un guide de programmation électronique en provenance d'un ordinateur de réseau.

12. Procédé selon l'une quelconque des revendications précédentes, dans lequel le lien comporte une ou plusieurs instructions qui amènent le logiciel à traiter le lien pour afficher le lien sous forme de texte, et / ou au moins sous forme d'une image graphique.

13. Procédé selon l'une quelconque des revendications précédentes, dans lequel la source de télévision comporte l'un des suivants : un fournisseur de télévision par câble, un fournisseur de télévision par ondes hertziennes, ou un fournisseur de télévision par satellite.

14. Système, comportant :
une connexion de réseau d'ordinateurs permettant de recevoir un message (600) en provenance d'au moins un ordinateur en réseau, le message (600) comprenant un lien (618, 620), le lien (618, 620) comprenant une référence à une caractéristique de la chaîne de télévision où le message (600) est l'un d'un message électronique, d'un message instantané, ou d'un message créé par un utilisateur dans un site de bavardage ;
un syntoniseur qui sélectionne au moins une chaîne de télévision parmi une pluralité de chaînes de télévision proposées par une source de télévision ;
un processeur ; et
un support lisible par ordinateur comprenant des instructions amenant le processeur à :
recevoir une sélection du lien par l'utilisateur (618, 620) ; et
régler le syntoniseur en correspondance avec la référence à une caractéristique de la chaîne de la télévision comprise dans le lien sélectionné par l'utilisateur (618, 620).

15. Système selon la revendication 14, dans lequel la caractéristique de la chaîne de télévision comporte au moins l'un d'un numéro de chaîne, d'un nom de réseau de télévision, d'un nom d'un programme de télévision acheminé sur une chaîne de télévision, d'un nom d'un acteur figurant dans un programme de télévision acheminé sur une chaîne de télévision, et d'un type de programme de télévision acheminé sur une chaîne de télévision

16. Système selon la revendication 14, dans lequel la caractéristique de la chaîne de télévision comporte le type de programme de télévision, comportant au moins l'un des suivants : informations, cinéma, sport, comédie, et émission dramatique.

17. Système selon l'une quelconque des revendications 14 à 16, dans lequel les instructions amènent le système informatique à déterminer si un spectateur a ou non les privilèges appropriés pour regarder une chaîne.

18. Système selon la revendication 17 dans lequel les privilèges comportent les privilèges permettant de regarder G (tous publics), PG (accord des parents souhaitable), PG-13 (interdit aux moins de 13 ans sans autorisation parentale), R (interdit aux moins de 17 ans), ou X (interdit aux moins de 18 ans).

19. Système selon l'une quelconque des revendications 14 à 18, dans lequel les instructions qui règlent le syntoniseur comprennent des instructions permettant de consulter la référence du lien dans un guide de programmation électronique.

20. Système selon l'une quelconque des revendications 14 à 19, dans lequel la source de télévision comporte l'un d'un fournisseur de télévision par câble ou d'un fournisseur de télévision par satellite.

21. Système selon l'une quelconque des revendications 14 à 20, comportant par ailleurs une sortie permettant de sortir des images à des fins d'affichage.

22. Logiciel dans un support lisible par ordinateur permettant de sélectionner une chaîne de télévision, le logiciel comportant des instructions permettant d'amener un système informatique à :
recevoir un message (600) comprenant un lien (618, 620) en provenance d'un ordinateur à distance, le lien (618, 620) comprenant une référence à une caractéristique de la chaîne de télévision où le message (600) est l'un d'un message électronique, d'un message instantané, ou d'un message créé par un utilisateur dans un site de bavardage ;
afficher le lien (618, 620) ;
recevoir la sélection du lien par l'utilisateur (618, 620) ; et
sélectionner une chaîne de télévision correspondant à la référence du lien sélectionné par l'utilisateur à la caractéristique de la chaîne de télévision.

23. Appareil comportant :
une interface configurée pour recevoir un message (600) comprenant un lien (618, 620) en provenance d'un ordinateur à distance, le lien (618, 620) comprenant une référence à une caractéristique de la chaîne de télévision où le message (600) est l'un d'un message électronique, d'un message instantané, ou d'un message créé par un utilisateur dans un site de bavardage ;
un processeur configuré pour produire un affichage comprenant le lien (618, 620) ; pour recevoir une indication d'une sélection par un utilisateur du lien (618, 620), et pour sélectionner une chaîne de télévision correspondant à la référence du lien sélectionné par l'utilisateur à la caractéristique de la chaîne de télévision ; et
une interface configurée pour sortir l'affichage.

24. Appareil selon la revendication 23, dans lequel la caractéristique de la chaîne de télévision comporte un ou plusieurs d'un numéro de chaîne, d'un identificateur d'un programme de télévision, d'une identité d'une personne associée à la chaîne de télévision et d'un type de programmation de télévision associé à la chaîne de télévision.
